Europäisches Patentamt

(19) European Patent Office

Office européen des brevets

(11) Publication number: **0 069 528**
A2

# (12) EUROPEAN PATENT APPLICATION

(21) Application number: **82303400.4**

(22) Date of filing: **29.06.82**

(51) Int. Cl.³: **B 01 D 29/10**
**G 21 F 9/00**

(30) Priority: **04.07.81 GB 8120725**

(43) Date of publication of application:
**12.01.83 Bulletin 83/2**

(84) Designated Contracting States:
**AT BE CH DE FR GB IT LI LU NL SE**

(71) Applicant: **B & R ENGINEERING LIMITED**
**Common Bank Employment Area Ackhurst Road**
**Chorley Lancashire PR7 1NH(GB)**

(72) Inventor: **Allison, William**
**54 River View**
**Carleton Preston Lancs(GB)**

(74) Representative: **Atkinson, Peter Birch et al,**
**Marks & Clerk Scottish Life House Bridge Street**
**Manchester M3 3DP(GB)**

(54) **Filtration method and apparatus.**

(57) Filtration apparatus includes a layer of a porous elastomeric material 9 which is mounted so as to be expandable on the application of fluid pressure to one side thereof. Liquid to be filtered enters an inlet 12, passes through the material 9 and out through the port 17 which is provided on the opposite side of the layer 9 to the port 12. During filtration solid collects on the inlet side of material 9. After a filtration operation fluid may be supplied through a fluid inlet 11 and causes the material 9 to balloon outwardly thus causing solid to be removed therefrom. Additionally, the pores in the material 9 are expanded on the application of the gas pressure so that any solid material trapped in the pores is blown out. The gas pressure used to expand the material 9 may be a fluctuating pressure. The apparatus is particularly useful for the filtration of liquids containing fine particulate radioactive solids.

FIG.1

CLEAN LIQUOR
UNFILTERED LIQUOR
FILTERED SOLID

Croydon Printing Company Ltd.

COMPLETE DOCUMENT

EP 0 069 528 A2

2.

The present invention relates to filtration apparatus and to a method of filtration.

A frequently encountered problem in filtration is blockage or blinding of the filter element caused by accumulated solid, this being particularly so in the case of sintered or woven filter elements. In some instances the blockage may be relieved by backwashing but this is not always practical due to the high backwash pressures which may be required. In such cases it is necessary to replace the filter element.

It is also known to precoat the filter element with a particulate solid material (e.g. Fullers Earth or talc) which collects the filtered solid. In time the precoat becomes blocked and must be removed and replaced by a new precoat layer before the element may be reused for filtration.

Such solutions, i.e. replacement of filter element or use of precoat, may be perfectly satisfactory in many cases but pose a number of problems when radioactive material is being filtered. Replacement of radioactively contaminated filter/elements is frequently effected manually and despite the precautions taken there is always the chance of accidental exposure of personnel to radiation. The problem is rendered more acute in that filter element replacement may have to take place at least once per week and the frequency of

3.

the operation obviously increases the chances of an accident occurring. Automatic replacement of the filter element, thus avoiding risk to personnel, would require expensive equipment.

The use of precoats for nuclear filtration is generally not to be recommended because of the difficulty of removing and applying the precoat to a radioactively contaminated element.

Other separation techniques are known which could be, and are, applied in the nuclear industry. Perhaps the most important of such techniques is centrifugation. However centrifuges may fail mechanically and their repair or replacement in radioactive environment gives rise to obvious problems.

Current developments in the disposal of unwanted radioactive solids produced or stored under liquids (e.g. water) is to filter the solid and encapsulate it in a hardenable matrix material which is not degraded by the radiation, e.g. cement, bitumen, or polymer material. Examples of such solids are ion exchange resins used for removing radioactive isotopes (e.g. $^{137}$Cs) from radioactive waste liquors, and the product known as "radioactive sludge" which is essentially fine particulate solid corrosion product of nuclear fuel cans stored in ponds.

There is thus a need for filtration and

0069528

-4-

apparatus which may be used in the nuclear industry and which obviates or mitigates the above disadvantage.

According to a first aspect of the invention there is provided fluid filtration apparatus having a layer of porous elastomeric material mounted to be expandable on the application of fluid pressure to one side thereof, a filtration inlet and a filtration outlet respectively on opposite sides of said layer, and a fluid inlet through which a fluid may be supplied in a direction opposed to that in which filtration flow occurs to expand said layer to remove collected solids.

According to a second aspect of the invention there is provided a method of filtration comprising effecting said filtration through a layer of a porous elastomeric material mounted to be expandable on the application of fluid pressure to the opposite side thereof to which fluid to be filtered is supplied and subsequently effecting expansion of said layer by fluid pressure to move collected solids and clear the pores of the layer.

The important feature of the invention is the use of the porous elastomeric layer which is mounted such as to be expandable by fluid pressure (preferably by means of a gas).

The elastomeric material may be considered a membrane and derives its porosity from pores which extend through the otherwise continuous structure of material. The material is preferably one which will stretch at least 100% from its relaxed condition whilst still being capable of resiling to its original form. In fact the more the elastomeric material is capable of extending the better are its properties for removing filtered solids. We therefore prefer that the elastomeric material is capable of extending by at least 200%, although preferably it is not extendable by more than 400%.

The material is preferably one in which the pores are closed when the material is in the relaxed condition so that the material is fluid impervious. Expansion of the material will cause the pores to open although the extent of pore opening will bear a disproportionate relationship to the degree of stretch applied. In other words a stretch of 10% may open the pores to one or two microns but a stretch of 100% may produce pore sizes of ca 100 microns.

To use such a material, i.e. one in which the pores are closed when the material is relaxed, it is necessary that the material be in a pre-stretched condition when mounted in the apparatus so that the pores are open sufficiently to permit fluid, but not solid, to pass therethrough. The amount of pre-stretch required will depend on the fluid being filtered. With 10 - 25% pre-stretch the pores are open sufficiently for gas but not liquid to pass therethrough. In this condition the apparatus of the invention may be used as a gas (e.g. air) filter. With upwards of 25% pre-stretched (e.g. 25 - 100%) the pores will permit passage of liquids but not solids therethrough. For use as a liquid filter, the amount of pre-stretch is dependent on the viscosity of the liquid, the lower the viscosity then the lower the pre-stretch required.

The pre-stretch is preferably applied along the material in two substantially perpendicular directions. This ensures a uniform opening of the pores.

The number of pores in the material is not believed to be critical but may be upwards of hundreds (e.g. thousands) per square centimetre. The pores may extend in a straight line through the material or may follow a tortuous path. Methods of forming both types of pore are known in polymer technology. The pores may for example be formed by stretching a non-porous elastomeric material and producing the pores with needles or other sharp implements. On relaxing of the material the pores will close.

Particularly suitable elastomeric materials are sheets of rubber and polyurethane, although the elastomeric materials can of course be used.

The elastomeric material will generally have a thickness of 1 to 7 mm. The porous elastomeric layer acts as the filter and is such that fluid will pass, during filtration, from one side of the layer to the other whilst particulate material is filtered out. Most of the particulate material will be held at the surface of the layer although minor amounts may enter the pores and be trapped therein.

Filtered solids collected on the layer are removed therefrom by stopping the flow of the material requiring filtration and applying fluid pressure to that side of the layer opposed to that on which solid has collected. The elastomeric layer will expand under the pressure causing solid material to be broken up and dislodged from the surface of the layer. During such expansion the pores of the layer will increase in cross-sectional size thus allowing particulate material to be blown out of the pores. The removed solids may be collected as required and the filtration operation may recommence. Such removal of the solid from the elastomeric layer may take place either when a desired amount of solid is collected on the layer or when the layer has become blocked by collected solids. In either case, solid removal from the layer is a simple operation.

Preferably the filter element is tubular and comprises a porous elongate annular former (e.g. a conventional sintered filter cartridge) over the outside surface of which is fixed the elastomeric layer in the form of a tight fitting sleeve held in position towards either end thereof by means providing a fluid tight fixture. Generally the sleeve will be produced of less diameter and length than the former so that the sleeve, when located in position, is pre-stretched to open the pores by the required amount. Filtration will be effected radially inwards of the element whereas the requisite expansion fluid pressure is applied from the inside of the former. Under such pressure the elastomeric layer will expand, effectively by inflation, to remove collected solids therefrom.

Owing to the simplicity of solid removal from the layer, the method and apparatus of the invention find particular application in the filtration of radioactive solids from water or other liquid since the need for frequent filter replacement, with the attendant disadvantages discussed above, is avoided.

Such nuclear applications include filtration of ion exchange resins and radioactive sludge. Using an elastomeric layer with a pore size of less than 5 $\mu$ it is possible to filter radioactive sludge, which has a viscosity similar to water and which contains fine particulate solids, to produce a cake on the elastomeric layer. This cake will be wet and may be dried before removal by passing air therethrough. The production of dry cake is particularly important because the encapsulation of radioactive waste in currently used polymer encapsulants is best effected with waste which is as dry as possible.

Preferably the elastomeric layer used for such nuclear filtration is of polyurethane because of its high resistance to radiation without the need to incorporate radiation absorbing filters.

Other non-nuclear solid/liquid filtrations are of course possible and it is envisaged that the apparatus and method may also be used as an air filter by having an elastomeric layer of suitable pore size.

The invention will be further described by way of example only with reference to the accompanying drawings in which:

Fig. 1 is a cross-sectional view of one embodiment of filtration apparatus in accordance with the invention; and

Fig. 2 is a diagrammatic view of a filtration system incorporating the apparatus shown in Fig. 1.

The illustrated filtration apparatus 1 comprises a cylindrical filter housing 2 with suitably ported end cap assemblies 3 and 4 held together by tie rods 5 (only one shown). Within the housing 2 is an elongate annular filter element 6 (to be described below) defining an annular region between its outer surface and the inner wall of the housing 2.

Filter element 6 comprises an annular cylindrical porous former 8 (e.g. a sintered ceramic or metallic filter cartridge) on the outer surface of which is a sleeve 9 of porous elastomeric material held in position by clips 10 providing a substantially gas-tight joint.

Sleeve 9 in its relaxed condition is of lesser length and diameter than the former 8 so that it has to be stretched in two directions (axially and radially) to fit over the former. The relaxed dimensions of the sleeve 9 are selected so that, when mounted in position, the sleeve 9 has the required degree of pre-stretch to open the pores in the sleeve 9 by the required amount.

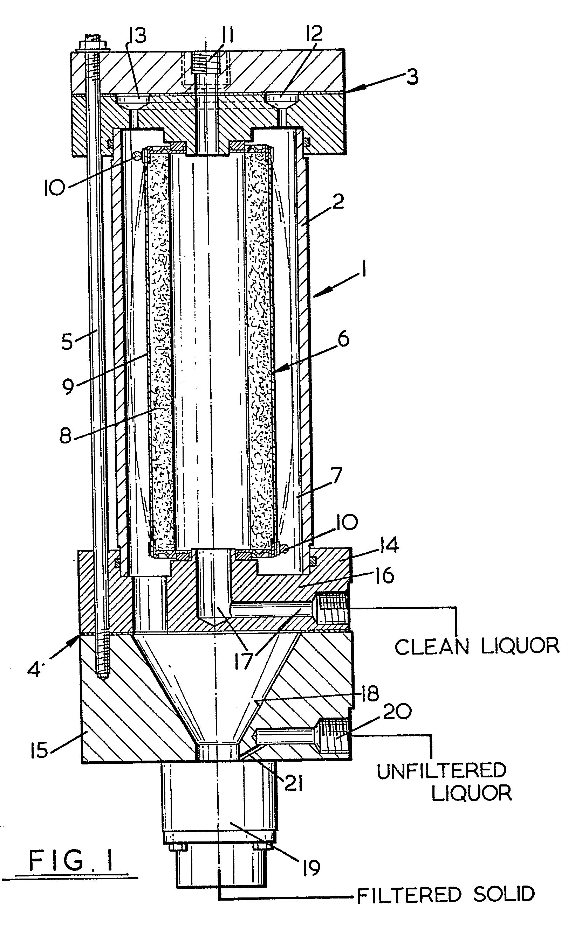

End cap assembly 3, i.e. that shown at the top of Fig. 1, includes a central port 11 communicating with the interior of filter element 6 and two ports 12 and 13 each communicating with the annular region 7. End cap assembly 4 includes an upper plate 14 and lower block 15. Plate 14 is generally annular but has a radially extending spur/portion 16 in which is a right angled port 17 providing communication between inside of filter element and the exterior of the apparatus. Block 15 includes a downwardly converging frusto-conical bore 18 acting as a hopper. A ball valve arrangement 19 is provided at the base of block 15 which also includes a port 20 communicating with the bore 18 through a narrow line 21.

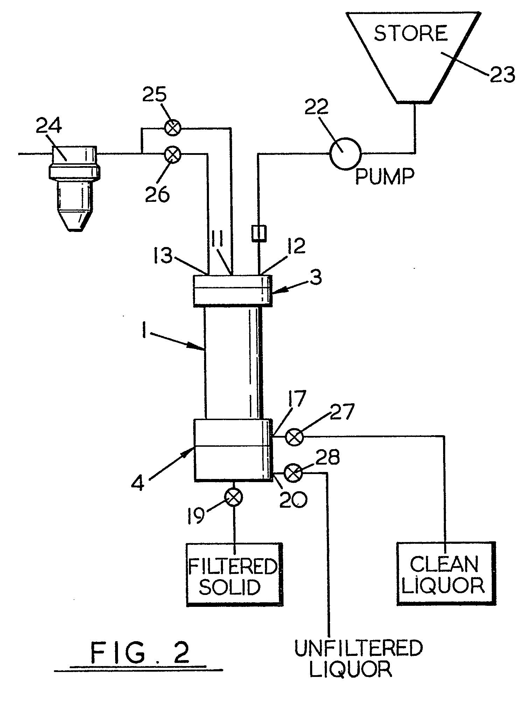

Fig. 2 diagrammatically illustrates a complete filtration system incorporating the filtration apparatus 1 shown in Fig. 1. In this system, material to be filtered is supplied by means of a pump 22 from a store 23 to the port 12. A gas supply source 24 (e.g. a compressor or air cylinder) is connected for selective communication with ports 11 and 13 by means of respective valves 25 and 26.

Ports 17 and 20 are associated with respective valves 27 and 28, the function of which will be described below.

To commence filtration, all valves shown in Fig. 2, with the exception of valve 27, are closed and material to be filtered is supplied by the pump 22 through the port 12 into the annular region 7 of the filter housing.

Filtration takes place by virtue of liquid passing through both the porous elastomeric sleeve 9 and the porous former 8 into the central region of filter element 6 and thence through open valve 27 to a suitable store. Filtered solid is collected on the outer surface of sleeve 8.

-11-

At the end of filtration, pump 22 is stopped and valve 27 is closed. Valve 26 is then opened to admit gas at a suitable pressure into annular region 7. Once pressure has built up, valve 28 is opened to allow unfiltered material collected in hopper 18 to be blown through port 20 for return to the store 23. Valve 28 is next closed and valve 27 re-opened to allow air to pass through the collected solids for drying purposes. During this stage sufficient pressure may be built up in annular region 7 to prevent slump of the filtered solid. After drying, valves 27 and 28 are closed.

Valve 25 may now be opened and the build up of gas pressure within filter element 6 will inflate the elastomeric sleeve 9 to a configuration such as that indicated by chain dot line in Fig. 1. This expansion of sleeve 8 will cause break-up of the collected solids which will fall and collect in hopper 18 for subsequent removal through ball valve 19. Additionally, solids trapped in the pores of sleeve 8 will be blown free, as described above. If desired a plusating gas pressure may be applied through part 11 to the interior of filter element 6. This will cause the sleeve 8 to "flutter" and will result in a more efficient discharge of trapped solids. Whichever method is used, removal of the solids from sleeve 8 will be practically complete so that, once sleeve 8 has been deflated, filtration may recommence.

-12-

A number of modifications to the abovedescribed apparatus are possible. For example, ball valve 19 may be replaced by a sliding gate valve. Alternatively or additionally, port 11 may also communicate with a water line for backwashing purposes should this be desired. It is also possible to effect filtration whilst there is at least partial inflation of sleeve 9, to use a different pore size for filtration than would be the case without inflation of the sleeve. The inflated sleeve can be further inflated to remove solids as described previously.

CLAIMS:

1.  Fluid filtration apparatus having a layer of porous elastomeric material mounted to be expandable on the application of fluid pressure to one side thereof, a filtration inlet and a filtration outlet respectively on opposite sides of said layer, and a fluid inlet through which an expansion fluid may be supplied to the opposite side of the layer to that to which fluid is supplied to expand said layer to remove collected solids.

2.  Apparatus as claimed in claim 1 wherein the elastomeric material is resiliently extendable by at least 100% from its relaxed condition.

3.  Apparatus as claimed in claim 1 or 2 wherein the elastomeric material is mounted in a pre-stretched condition.

4.  Apparatus as claimed in any one of claims 1 to 3 comprising a tubular filter element including a porous elongate former and wherein the porous elastomeric material is provided as a sleeve around said former.

5.  Apparatus as claimed in claim 4 wherein the former is of annular section.

6.  Apparatus as claimed in claims 4 or 5 wherein the former is a sintered filter cartridge.

7.  Apparatus as claimed in any one of claims 4 to 6 wherein the tubular filter element is mounted in a housing such that an expansion space for the sleeve is defined between the filter element and the interior of the housing, said space is capable of being in communication with a source of fluid to be filtered, the interior of the filter element is in communication with a discharge conduit for filtered fluid, and said interior is also capable of being in communication with the source of expansion fluid.

8.    Apparatus as claimed in claim 6 wherein the source of pressurised fluid is selectively communicable with said space.

9.    Apparatus as claimed in claim 7 or 8 wherein there is provided a region for collection of solids removed from the sleeve.

10.    Apparatus as claimed in claim 9 wherein said region is provided with solids discharge valve.

11.    Apparatus as claimed in claim 9 or 10 which is to be used for filtering liquid and wherein said region communicates with a discharge conduit for unfiltered liquid.

12.    Apparatus as claimed in any one of claims 1 to 11 wherein the elastomeric material is selected from rubber and polyurethane.

13.    Apparatus as claimed in any one of claims 1 to 12 wherein the elastomeric material has a thickness of 1 to 7 mm.

14.    A method of filtration comprising effecting said filtration through a layer of a porous elastomeric material mounted to be expansible on the application of fluid pressure to the opposite side thereof to which fluid to be filtered is supplied and subsequently
effecting expansion of said layer by fluid pressure
to remove collected solids and clear the pores of the
layer.

15.   A method as claimed in claim 14 wherein the fluid
to be filtered contains radioactive solids.

16.   A method as claimed in claim 14 or 15 wherein
gas pressure applied to expand the elastomeric
material.

17.   A method as claimed in claim 16 wherein the gas
pressure applied to expand the elastomeric material
is a fluctuating pressure.

CLEAN LIQUOR

UNFILTERED
LIQUOR

FIG.1

FILTERED SOLID

FIG. 2